# EUROPEAN PATENT APPLICATION

(11) **EP 4 253 128 A1**
(43) Date of publication of application: **04.10.2023**
(21) Application number: 22165844.6
(22) Date of filing: 31.03.2022
(51) Int. Cl.: B60L 53/16, B60L 53/30, H01R 13/66

(54) **CHARGING STATION WITH A CHARGING CONNECTOR FOR CHARGING A BATTERY OF AN ELECTRIC VEHICLE AND METHOD FOR MONITORING THE CHARGING CONNECTOR**

(71) Applicant: Siemens Aktiengesellschaft, 80333 München (DE)
(72) Inventor: Lerbs, Stefan, 90409 Nürnberg (DE); Villnow, Michael, 90765 Fürth (DE)
(74) Representative: Siemens Patent Attorneys

(57) **Abstract**

With the invention a charging station with at least one charging connector for charging of at least one battery of an electric vehicle is provided, wherein the charging station comprises at least one impairment monitoring system for a remote monitoring of an impairment of an operability of the charging connector. In addition a method for monitoring of the charging connector of the charging station with following steps is provided: a) Collecting of current data of the charging connector with the aid of at least one data collecting tool wherein the operability of the charging connector is reflected by the current data, b) Transferring of the current data from the collecting tool to at least one analyzing tool and c) Checking of the operability of the charging connector with the aid of the analyzing tool for analyzing the current data. In the first step, current data which show a current status of the charging connector are detected and collected. In the second step, these data are transferred (sent) to the analyzing tool. The complete process can be done remotely. Hence, on-site personnel is not necessary.

## Description

### BACKGROUND OF THE INVENTION

### 1. Field of the invention

The patent application relates to charging station with a charging connector for charging a battery of an electric vehicle and method for monitoring the charging connector.

### 2. Description of the related art

With the rise of electromobility more and more charging stations for electric vehicles (e.g. cars or trucks) are operated in private as well as in public areas. Observations in the field have shown that many charging connectors get damaged and need to get replaced before the scheduled end of life of the charging connectors.

Usually, the charging connectors are not locked in the respective mounting of the charging station and it is not detected if the charging connector is placed in the mounting. Vandalism, improper handling or accidental dropping of the charging connector are the main reasons for damages. As a result, an operability of the charging station with the charging connector cannot be guaranteed.

### SUMMARY OF THE INVENTION

It is an object of the invention to provide a possibility to check an operability of the charging connector of a charging station.

The object is achieved by the invention specified in the claims.

Concerning a first aspect of the invention a charging station with at least one charging connector for charging of at least one battery of an electric vehicle is provided, wherein the charging station comprises at least one impairment monitoring system for a remote monitoring of an impairment of an operability of the charging connector.

Concerning a further aspect of the invention a method for monitoring of the charging connector of the charging station with following steps is provided: a) Collecting of current data of the charging connector with the aid of at least one data collecting tool wherein the operability of the charging connector is reflected by the current data, b) Transferring of the current data from the collecting tool to at least one analyzing tool and c) Checking of the operability of the charging connector with the aid of the analyzing tool for analyzing the current data. In the first step, current data which show a current status of the charging connector are detected and collected. In the second step, these data are transferred (sent) to the analyzing tool.

Preferably the transferring of the current data is carried out by a wired and/or wireless data connection between the data collecting tool and the analyzing tool. So, a wired and/or a wireless communication system is used for the transferring of the collected current data. The transferring of the current data and/or a transferring of data from the analyzing tool can be performed in several ways: signals can be modulated on a control pilot (CP), on a proximity pilot (PP), on an energy wire or on an ethernet wire (for future charging cable generations). For CHAdeMO based charging connectors and cables the data transferring can be done over CANbus.

The impairment monitoring system comprises a device for the remote monitoring. This device can comprise a telemonitor.

The checking of the operability (usability) of the charging connector based on the collected and transferred current data of the charging connector is done by a controller. The analyzing tool is a part of the controller. Based on a result of the checking the charging of the battery is enabled or disabled. For the complete process on-site personnel (e.g. for an inspection of the charging connector) is not necessary. On-site personnel expenses can be avoided.

The operability of the charging connector can centrally be checked. But it is possible that the checking of the operability of the charging connector is carried out on-site (locally). In this case the result of the checking can be managed on-site. But the result of the checking can be sent to a not located central unit, too.

The result of the checking is displayed by a display tool for showing the operability of the charging connector and the charging station, respectively. The display tool can be located at the charging station and/or can be centrally located (e.g. at a central controller).

In a preferred embodiment, the impairment monitoring system comprises at least one detector for detecting of at least one characteristic of the charging connector, wherein the detector is selected from the group consisting of a location detector for detecting a location of the charging connector, a movement detector for detecting a movement of the charging connector, an orientation detector for detecting an orientation of the charging connector, an accelerometer for detecting an acceleration of the charging connector and a deformation detector for detecting a deformation of the charging connector. In order to improve an informative value of the checking of the operability of the charging connector a combination of these detectors is preferred.

The detectors comprise at least one sensor for the absolute or relative characteristic and for changes thereof, respectively. With the detector and the sensor exceptional (unusual) movements (e.g. linear and/or angular movements) of the charging connector (or a part of the charging connector) or mechanical impacts on the charging connector (or on apart of the charging connector) can be identified. For instance, an exceptional movement is an acceleration like freefall of the charging connector. The mechanical impact on the charging connector are e.g. a deformation of a housing of the charging connector and a deformation of a connection point of the charging connector.

In a preferred embodiment, the detector comprises at least one strain gauge. With the aid of a strain gauge a deformation of the charging connector can easily be identified.

The movement of the charging connector can be detected by measuring different physical variables. For instance, the physical variable is a magnetic field strength.

Preferably, the detector comprises at least one multi-dimensional inertial measurement unit. For instance, the multi-dimensional inertial measurement unit comprises at least one 3D digital sensor. With that, a calculation of the current position and/or orientation of the charging connector and/or a change of the position and/or orientation of the charging connector is possible. In a preferred embodiment, the detector comprises at least one magnetometer.

In a further preferred embodiment, the multi-dimensional inertial measurement unit comprises at least one accelerometer.

In addition, it is preferred that the multi-dimensional inertial measurement unit comprises at least one gyroscope.

The gyroscope is a device used for measuring of an orientation and/and angular velocity of an object.

The impairment monitoring system can be located in a distance to the charging connector. Preferably, the impairment monitoring system is located near by the charging connector. Preferably, the impairment monitoring system is at least partly located in a housing of the impairment monitoring system.

For the monitoring digital equipment is used. For that, the impairment monitoring system is at least partly located on a chip of the monitoring system. So, an internal chip or internal chips are used. But the use of external chips is possible, too.

There are characteristics of parts of the charging station which are influenced by temperature. Hence, the result of the checking of the operability of the charging connector can be affected by the temperature. So, a temperature of the charging station, a temperature of the charging connector, a temperature of the impairment monitoring system or a temperature of a part thereof, e.g. a suitable detector, should be measured. Therefore preferably, the impairment monitoring system comprises at least one temperature sensor. The temperature sensor can be used for taking the temperature dependency of a characteristic of the charting connector into account. In addition, it can be a part for a compensation of temperature dependent material characteristic.

It is preferred that the impairment monitoring system comprises at least one crack detector for detecting of a crack of the housing of the impairment monitoring system. The crack can be a little crack in the housing like a hairline crack. But the crack can be the result of a complete damage of the housing of the charging connector, too. In this case it is possible the charging connector cannot be operated at all.

Humidity can affect the result of the checking of the operability of the charging connector, too. In a preferred embodiment, the impairment monitoring system comprises at least one humidity sensor for detecting of an intake of humidity into the housing of the impairment monitoring system. With the aid of the humidity sensor a damage of the housing of the impairment monitoring system can be detected. The humidity sensor can be used as a crack detector.

For the checking of the operability of the charging connector an analysis of outputs of the detectors is carried out. For that, appropriate algorithms are used. By that, a calculation of the current position and/or a change of the position and/or a change of the orientation of the charging connector is available.

For a more detailed (and less time critical) analysis, e.g. for an exact damage detection, data can also be analyzed in a backend environment.

In a preferred embodiment, the collecting of the current data, the transferring of the collected data and/or the checking of the operability are repeatedly carried out with a sampling rate of several seconds. By that, a constant knowledge about the operability of the charging connector and hence, a constant knowledge about the operability of the charging station is available. By reading the sensor with a high sampling rate for several seconds covering the initial impact, a detailed pattern of this impact can be recorded. By analyzing the specific pattern of the acceleration, a typical drop can be distinguished from a harmful impact causing severe damages of the housing.

In a further preferred embodiment, for the checking a training of pattern recognition is used. A machine learning tool is used, e.g. by mapping a type of damage to a raw data stream to increase a hit accuracy.

With the invention following aspects of the operability of the charging connector of the charging station can be evaluated:
- Positioning of the charging connector in its mounting.
- Dropping of a charging connector to the ground, incl. information on the time (timestamp) of the dropping and lifting of the charging connector from the ground and placing it into its parking position.
- Height of the dropping of the charging connector.
- Speed of the dropping of the charging connector.
- Direction of the acceleration of the charging connector caused the dropping. The direction of the acceleration is a hint for a reason of the dropping. The dropping can be accidental or on purpose.
- Evaluating of an impact on the charging connector caused by the dropping (e.g. area of the impact). This can be based on experiences of previous droppings of a number of charging connectors.

Summarizing following advantages of the invention can be stressed:
- Remote detection and diagnosis of a freefall of a charging connector or impacts (e.g. shocks and damages) on a charging connector are possible. With the result of the detection and the diagnosis the operability of the charging connector can be evaluated.
- For the detection and diagnosis on-site personnel is not necessary. Expenses for the on-site personnel can be avoided.
- A damage or the charging connector and hence a damage of the charging station can be recorded and necessary follow-up actions e.g. repairment or exchange of the charging connector can be started.
- The invention provides a low-cost solution with industrialized sensors and systems on a chip.
- More timely reaction of a local operator if a charging plug is not in a mounting position. The local operator can reposition the charging connector in the mounting (parking) position and can avoid unnecessary wear and damage.
- Knowledge about connector damage allows proactive adjustment to maintenance and replacement plan which will increase availability of charging station.
- A setup of a database that allows more accurate insights about a probability of a damage, a replacement and damage patterns.
- An increased accuracy of the checking of the operability of charging connectors of a charging station is possible wherein an increased number of charging connectors are equipped with detectors and sensors.
- Real-time analysis of sensor raw data in the connector provides health status information of
   the connector without delay

### BRIEF DESCRIPTION OF THE DRAWINGS

Further features and advantages of the invention are produced from the description of an exemplary embodiment with reference to the drawings. The drawings are schematic.

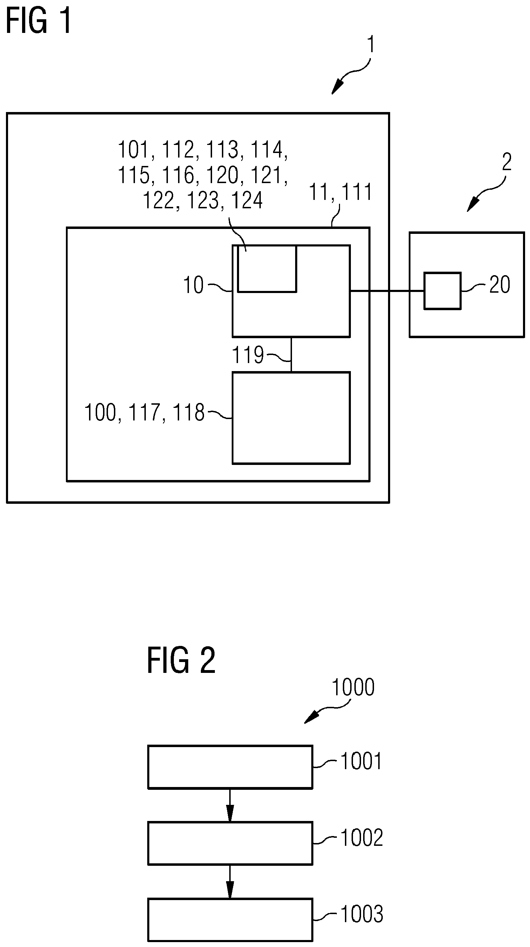

Figure 1 shows a charging station with a charging connector
Figure 2 shows a method for monitoring of a charging connector

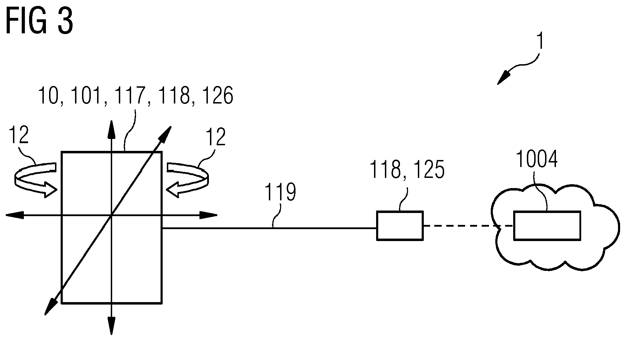

Figure 3 shows details of the method for monitoring of a charging connector.

### DETAILED DESCRIPTION OF THE INVENTION

Provided is a charging station 1 with a charging connector 10 for charging of a battery 20 of an electric vehicle 2. The electric vehicle 2 is a car. The charging station 1 comprises an impairment monitoring system 11 for a remote monitoring 1001 of an impairment of an operability 100 of the charging connector 10.

The impairment monitoring system 11 comprises at least one detector 101 for detecting of at least one characteristic of the charging connector 10. The detector 101 can be a multi-dimensional inertial measurement unit 120 for detecting a motion 12 of the charging connector 10. The multi-dimensional inertial measurement unit 120 can comprise a 3-axis accelerometer 121, a 3-axis gyroscope 122 and a 3-dimensional magnetometer 123 which are embedded in the charging connector 10.

In addition, a temperature sensor 113, a humidity sensor 114, and a deformation detector 124 with a strain gauge 116 are embedded in the charging connector 10. Moreover, a crack detector 115 is embedded.

The impairment monitoring system 11 with the detectors (sensors) 101 is at least partly located in a housing 111 of the impairment monitoring system 11.

The impairment monitoring system 11 is at least partly located on a chip 112 of the monitoring system 11.

With the aid of the charging station 1 a method 1000 for monitoring of the charging connector 10 of the charging station 1 is carried out with following steps:
a) Collecting 1001 of current data of the charging connector 10 with the aid of at least one data collecting tool 117 wherein the operability of the charging connector 10 is reflected by the current data;
b) Transferring 1002 of the current data from the collecting tool 117 to an analyzing tool 118; and
c) Checking 1003 of the operability of the charging connector with the aid of the analyzing tool 118 for analyzing the current data.

For the transferring of data wireless data connections 119 are used.

The collecting of the current data, the transferring of the collected (current) data and the checking of the operability are frequently carried out with a sampling rate of several seconds. For the checking a training of pattern recognition is used.

After measuring the linear and angular acceleration and the orientation via the multi-dimensional inertial measurement unit 120 which is embedded in the charging connector 10 a data preprocessing via a preprocessor controller 126 is carried out. In the next step resulting data are transferred to a charge controller 125 via Control Pilot wire (in the charging cable 119). With the charging controller 125 data are provided to analytics backend for detailed charge plug damage diagnostics.

After that the data based on the diagnostics and based on the acceleration measurement are combined and analyzed together.

For each single analysis or for the combined analysis other parameters (temperature, humidity) are taken into account.

The result of these proceedings are remote service diagnostics 1004. With that following is analyzed:
- Speed of a freefall of the charging connector 10.
- Force applied to the charging connector 10.
- Area of an impact to the charging connector 10 and the housing 111 of the charging connector 10, respectively.
- Pattern recognition of the pattern in the charging connector 10 and in the housing 111 of the charging connector which is caused by the impact.
- Outside temperature and/or temperature of the charging connector 10 and/or temperature of the housing 111 of the charging connector 10 for a calculation of a probability of a Damage of the charging connector 10.
- Difference of timestamps for freefall and/or for impact measurement and/or for repositioning of the charging connector 10 in a parking position for a deduction of the probability of vandalism.

## Claims

1. Charging station (1) with at least one charging connector (10) for charging of at least one battery (20) of an electric vehicle (2), wherein the charging station (1) comprises at least one impairment monitoring system (11) for a remote monitoring (1001) of an impairment of an operability (100) of the charging connector (10).

2. Charging station according to claim 1, wherein the impairment monitoring system (11) comprises at least one detector (101) for detecting of at least one characteristic of the charging connector (10), wherein the detector (101) is selected from the group consisting of a location detector for detecting a location of the charging connector (10), a movement detector for detecting a movement of the charging connector (10), an orientation detector for detecting an orientation of the charging connector (10), an accelerometer (123) for detecting an acceleration of the charging connector (10) and a deformation detector for detecting a deformation of the charging connector.

3. Charging station according to claim 2, wherein the deformation detector comprises at least one strain gauge (116) .

4. Charging station according to one of the claims 2 to 3, wherein the detector (101) comprises at least one multi-dimensional inertial measurement unit (120).

5. Charging station according to claim 4, wherein the detector (101) comprises at least one magnetometer (123).

6. Charging station according to claim 4 or 5, wherein the multi-dimensional inertial measurement unit (120) comprises at least one accelerometer (121).

7. Charging station according to one of the claims 4 to 6, wherein the multi-dimensional inertial measurement unit (120) comprises at least one gyroscope (124).

8. Charging station according to one of the claims 1 to 7 wherein the impairment monitoring system (11) is at least partly located in a housing (111) of the impairment monitoring system (11).

9. Charging station according to one of the claims 1 to 8, wherein the impairment monitoring system (11) is at least partly located on a chip (112) of the monitoring system (11).

10. Charging station according to one of the claims 1 to 9, wherein the impairment monitoring system (11) comprises at least one temperature sensor (113).

11. Charging station according to one of the claims 1 to 12, wherein the impairment monitoring system (11) comprises at least one crack detector (115) for detecting of a crack of the housing (111) of the impairment monitoring system (11).

12. Charging station according to one of the claims 8 to 10, wherein the impairment monitoring system (10) comprises at least one humidity sensor (114) for detecting of an intake of humidity into the housing (111) of the impairment monitoring system (11).

13. Method (1000) for monitoring of a charging connector (10) of a charging station (1) according to one of the claims 1 to 12, with following steps:
a) Collecting (1001) of current data of the charging connector (10) with the aid of at least one data collecting tool (117) wherein the operability of the charging connector (10) is reflected by the current data;
b) Transferring (1002) of the current data from the collecting tool (117) to at least one analyzing tool (118); and
c) Checking (1003) of the operability of the charging connector with the aid of the analyzing tool (118) for analyzing the current data.

14. Method according to claim 13, wherein the transferring of the current data is carried out by a wired and/or wireless data connection (119) between the data collecting tool (117) and the analyzing tool (118).

15. Method according to claim 13 or 14, wherein the collecting of the current data, the transferring of the collected data and/or the checking of the operability are repeatedly carried out with a sampling rate of several seconds.

16. Method according to one of the claims 13 to 15, wherein for the checking a training of pattern recognition is used.
